# EUROPÄISCHE PATENTANMELDUNG

(11) **EP 4 481 301 A1**
(43) Veröffentlichungstag der Anmeldung: **25.12.2024**
(21) Anmeldenummer: 24181515.8
(22) Anmeldetag: 11.06.2024
(51) Int. Cl.: F25B 23/00

(54) **ELASTOKALORISCHE WÄRMEPUMPE UND KRAFTFAHRZEUG MIT ELASTOKALORISCHER WÄRMEPUMPE**

(30) Priorität: 21.06.2023 DE 102023205828
(71) Anmelder: Volkswagen AG, 38440 Wolfsburg (DE)
(72) Erfinder: Schneck, Christian, 38104 Braunschweig (DE); Kujat, Sergej, 27259 Varrel (DE); Tonn, Matthias, 38379 Wolsdorf (DE); Novgorodov, Konstantin, 38302 Wolfenbüttel (DE); Olfe, Jürgen, 38543 Volkse (DE)

(57) **Zusammenfassung**

Um eine elastokalorische Wärmepumpe bereitzustellen, welche hohe Dichtigkeitsanforderungen erfüllt und einen hohen Wirkungsgrad aufweist, wird eine elastokalorische Wärmepumpe (100) umfassend mindestens einen ersten Kühlmediumkanal (10), mindestens einen zweiten Kühlmediumkanal (11), mindestens ein elastokalorisches Element (12), und eine Antriebsvorrichtung (15) vorgeschlagen, wobei das mindestens eine elastokalorische Element (12) zwischen einem ersten Kühlmediumkanal (10) und einem zweiten Kühlmediumkanal (11) angeordnet ist und endseitig mit jeweils einem Schlitten (13) verbunden ist, wobei die Schlitten (13) verschiebbar an zwei nicht parallel zueinander angeordneten Führungsmitteln (14) angeordnet sind, wobei die Antriebsvorrichtung (15) ausgebildet ist, die Schlitten (13) entlang der Führungsmittel (14) zyklisch zu verschieben, so dass das mindestens eine elastokalorische Element (12) abwechselnd in einen thermischen Kontakt mit einer Außenwand (16), insbesondere mit einem Kontaktbereich (31) einer Außenwand (16), des ersten Kühlmediumkanals (10) und in einen thermischen Kontakt mit einer Außenwand (17), insbesondere mit einem Kontaktbereich (31) einer Außenwand (17), des zweiten Kühlmediumkanals (11) gebracht wird.

## Beschreibung

Die vorliegende Erfindung betrifft eine elastokalorische Wärmepumpe umfassend mindestens einen ersten Kühlmediumkanal, mindestens einen zweiten Kühlmediumkanal, und mindestens ein elastokalorisches Element.

Ferner betrifft die vorliegende Erfindung ein Kraftfahrzeug mit einer elastokalorischen Wärmepumpe.

Zur Effizienzsteigerung von Wärmepumpen, beispielsweise in Kraftfahrzeugen, können elastokalorische Wärmepumpen verwendet werden. In einer elastokalorischen Wärmepumpe wird der elastokalorische Effekt genutzt, wobei durch zyklische Deformation eines elastokalorischen Materials eine reversible Temperaturänderung hervorgerufen wird, welche für die Übertragung von Wärme von einem kälteren Kühlmittelstrom auf einen wärmeren Kühlmittelstrom genutzt werden kann.

Aus der DE 10 2018 200 376 A1 ist eine Vorrichtung zum Wärmetausch bekannt, wobei die Vorrichtung zum Wärmetausch elastokalorische Bänder aus elastokalorischem Material und Wärmeleitelemente umfasst, wobei die Wärmeleitelemente so ausgebildet sind, dass ein bikonvexer Abschnitt eines Wärmeleitelementes in zumindest ein elastokalorisches Band eingreift und dieses verformt, sodass ein elastokalorischer Effekt erzielt wird, und eine Wärmeleitung zwischen dem zumindest einen elastokalorischen Band und dem bikonvexen Abschnitt des Wärmeleitelementes erfolgt, und ein planarer Abschnitt eines weiteren Wärmeleitelementes im unverformten Zustand des elastokalorischen Bandes so in Kontakt mit diesem steht, dass eine Wärmeleitung zwischen dem planaren Abschnitt des weiteren Wärmeleitelementes und dem zumindest einen elastokalorischen Band erfolgt.

Die DE 10 2018 213 497 A1 offenbart ein Mittel zum Wärmetausch, welches eingerichtet ist, eine Fluidleitung, die ein Wärmetransportfluid führt, zu umschließen. Das Mittel umfasst zumindest ein elastokalorisches Element, das mit der Fluidleitung verbunden ist, zumindest einen Aktor, der auf das elastokalorische Element wirkt und eingerichtet ist, bei Betätigung eine Kraft auf das zumindest eine elastokalorische Element auszuüben, um das zumindest eine elastokalorische Element zu verformen, und zumindest ein Befestigungselement, das eingerichtet ist, das Mittel zum Wärmetausch an der Fluidleitung zu befestigen.

Die DE 10 2021 209 740 A1 offenbart eine Wärmepumpe umfassend ein elastokalorisches Element, einen ersten Kühlmittelkanal auf einer Kaltseite für einen ersten Kühlmittelstrom und einen zweiten Kühlmittelkanal auf einer Heißseite für einen zweiten Kühlmittelstrom, ein erstes Triebelement und ein zweites Triebelement, wobei das elastokalorische Element beidseitig zwischen dem ersten Triebelement und dem zweiten Triebelement eingespannt ist, wobei das erste Triebelement und das zweite Triebelement ausgebildet sind, das elastokalorische Element zyklisch zwischen dem ersten Kühlmittelkanal und dem zweiten Kühlmittelkanal hin und her zu bewegen und das elastokalorische Element zyklisch zu verformen.

Aus der US 11,204,189 B2 ist ein Kühlverfahren unter Verwendung eines elastokalorischen Materials bekannt.

Bei elastokalorischen Wärmepumpen, welche Wärmeenergie von einem kälteren gasförmigen oder flüssigen Kühlmedium auf ein wärmeres gasförmiges oder flüssiges Kühlmedium übertragen, sind hohe Dichtigkeitsanforderungen zu erfüllen, damit die Kühlmedien nicht austreten. Zudem ist insbesondere bei Kühlmedien mit einem geringen Wärmeleitkoeffizienten eine besonders große Oberfläche für das elastokalorische Element vorzusehen, um einen ausreichenden Wärmeübertrag zu gewährleisten. Dies stellt hohe Anforderungen an die Form und damit die Fertigbarkeit des elastokalorischen Elementes. Durch einen direkten Kontakt mit dem Kühlmedium Wasser kann dieses auf dem elastokalorischen Element kondensieren, welches gegebenenfalls auf der Heißseite wieder verdampft, und somit von der Warmluft aufgenommen wird. Bei derartigen Wärmepumpen muss daher zusätzlich eine Entfeuchtung erfolgen.

Der vorliegenden Erfindung liegt die Aufgabe zugrunde, eine elastokalorische Wärmepumpe bereitzustellen, welche hohe Dichtigkeitsanforderungen erfüllt und einen hohen Wirkungsgrad aufweist.

Zur Lösung der der Erfindung zugrundeliegenden Aufgabe wird eine elastokalorische Wärmepumpe umfassend mindestens einen ersten Kühlmediumkanal, mindestens einen zweiten Kühlmediumkanal, mindestens ein elastokalorisches Element, und eine Antriebsvorrichtung vorgeschlagen, wobei das mindestens eine elastokalorische Element zwischen einem ersten Kühlmediumkanal und einem zweiten Kühlmediumkanal angeordnet ist und endseitig mit jeweils einem Schlitten verbunden ist, wobei die Schlitten verschiebbar an zwei nicht parallel zueinander angeordneten Führungsmitteln angeordnet sind, wobei die Antriebsvorrichtung ausgebildet ist, die Schlitten entlang der Führungsmittel zyklisch zu verschieben, so dass das mindestens eine elastokalorische Element abwechselnd in einen thermischen Kontakt mit einer Außenwand, insbesondere mit einem Kontaktbereich einer Außenwand, des ersten Kühlmediumkanals und in einen thermischen Kontakt mit einer Außenwand, insbesondere mit einem Kontaktbereich einer Außenwand, des zweiten Kühlmediumkanals gebracht wird.

In dem ersten Kühlmediumkanal und in dem zweiten Kühlmediumkanal kann ein Kühlmedium geführt sein. Bei dem Kühlmedium kann es sich um ein Fluid, insbesondere um ein gasförmiges Kühlmedium und/oder um ein flüssiges Kühlmedium, handeln. Das Kühlmedium kann ferner als Kühlmittel ausgebildet sein. Insbesondere kann es sich bei dem Kühlmedium um Wasser oder Luft handeln.

Das mindestens eine elastokalorische Element ist zwischen dem ersten Kühlmediumkanal und dem zweiten Kühlmediumkanal angeordnet und endseitig mit jeweils einem Schlitten verbunden. Es sind somit insbesondere zwei Schlitten vorgesehen. Die Antriebsvorrichtung dient dazu, die Schlitten an zwei nicht parallel zueinander angeordneten Führungsmitteln zyklisch zu verschieben, sodass das elastokalorische Element abwechselnd in einen thermischen Kontakt mit einer Außenwand, insbesondere mit einem Kontaktbereich einer Außenwand, des ersten Kühlmediumkanals und in einen thermischen Kontakt mit einer Außenwand, insbesondere mit einem Kontaktbereich einer Außenwand, des zweiten Kühlmediumkanals gebracht wird. Bei dem thermischen Kontakt handelt es sich insbesondere um einen physischen Kontakt. Durch den wechselseitigen thermischen Kontakt kann eine Wärmeübertragung von dem elastokalorischen Element auf den ersten Kühlmediumkanal, insbesondere auf ein in dem ersten Kühlmediumkanal geführtes Kühlmedium, und eine Wärmeübertragung von dem zweiten Kühlmediumkanal, insbesondere von einem in dem zweiten Kühlmediumkanal geführten Kühlmedium, auf das elastokalorische Element erfolgen.

Da das elastokalorische Element im thermischen Kontakt an der Außenwand des ersten Kühlmediumkanals und/oder an der Außenwand des zweiten Kühlmediumkanals anliegt, steht das elastokalorische Element nicht in einem unmittelbaren physischen Kontakt mit dem im ersten Kühlmediumkanal und/oder im zweiten Kühlmediumkanal geführten Kühlmedium. Somit können hohe Dichtigkeitsanforderungen erfüllt werden. Auch ist die Korrosionsgefahr für das elastokalorische Element verringert. Zudem kann bei geeigneter Wahl des Materials des ersten Kühlmediumkanals und/oder des zweiten Kühlmediumkanals eine hohe Wärmeübertragung und somit ein hoher Wirkungsgrad erzielt werden.

Der erste Kühlmediumkanal und der zweite Kühlmediumkanal können somit bevorzugt zumindest im Bereich der Außenwand, weiter bevorzugt in einem Kontaktbereich der Außenwand, aus einem Material mit einem hohen Wärmeleitkoeffizienten bestehen. Bei dem Material kann es sich beispielsweise um ein Metall, insbesondere Kupfer oder Aluminium, handeln.

Aufgrund der hohen Wärmeleitfähigkeit des Materials des ersten Kühlmediumkanals und des zweiten Kühlmediumkanals, insbesondere des Kontaktbereichs der Außenwand, wird die Wärme zügig an das Kühlmedium geleitet.

Die Schlitten können mittels der Antriebsvorrichtung zyklisch entlang der nicht parallel zueinander angeordneten Führungsmittel verschoben werden. Da die Führungsmittel nicht parallel zueinander angeordnet sind, verändert sich bei der zyklischen Verschiebung der Abstand der Schlitten zueinander, das heißt, der Abstand nimmt zyklisch zu und ab. Hierdurch können Rückstellkräfte erzeugt werden, welche die zyklische Verschiebung unterstützen und insbesondere die Schlitten wieder in eine Ausgangsposition zurückführen.

Beispielsweise kann durch die zyklische Abstandsänderung der Schlitten das mindestens eine elastokalorische Element zyklisch gedehnt werden.

Unter einer Dehnung kann eine Streckung, also eine positive Längenänderung, und/oder eine Stauchung, also eine negative Längenänderung, verstanden werden.

Durch die zyklische Dehnung des elastokalorischen Elements während des Verschiebens kann dieses infolge des elastokalorischen Effekts erwärmt und abgekühlt werden. Hierdurch kann ein Wärmetransport zwischen dem ersten Kühlmediumkanal und dem zweiten Kühlmediumkanal stattfinden.

Das elastokalorische Element weist in einem Dehnungszustand eine der Dehnung entgegenwirkende Materialrückstellkraft auf. Da die Führungsmittel nicht parallel zueinander angeordnet sind, weisen diese Materialrückstellkräfte auch eine Komponente entlang der Führungsmittel auf, welche die vorstehend erläuterte Rückstellkraft bereitstellt. Denkbar ist auch, dass eine Feder zwischen den Schlitten angebracht ist, welche bei einer zyklischen Verschiebung der Schlitten entlang der nicht parallel zueinander angeordneten Führungsmittel gedehnt, d.h. gestaucht oder gestreckt, wird.

Der erste Kühlmediumkanal und der zweite Kühlmediumkanal können in einem, bevorzugt rechten, Winkel zu einer Haupterstreckungsrichtung des elastokalorischen Elementes ausgerichtet sein. Die Haupterstreckungsrichtung des elastokalorischen Elements entspricht dabei bevorzugt der Dehnungsrichtung des elastokalorischen Elements.

Der mindestens eine erste Kühlmediumkanal kann dabei als Heißkanal ausgebildet sein. Der mindestens eine zweite Kühlmediumkanal kann als Kaltkanal ausgebildet sein. Im Betrieb der Wärmepumpe kann somit vorgesehen sein, dass Wärme von einem zweiten Kühlmediumkanal, insbesondere von einem in einem zweiten Kühlmediumkanal geführten Kühlmedium, auf einen ersten Kühlmediumkanal, insbesondere auf ein in einem ersten Kühlmediumkanal geführtes Kühlmedium, übertragen wird.

Bevorzugt sind mehrere erste Kühlmediumkanäle, mehrere zweite Kühlmediumkanäle und mehrere elastokalorische Elemente vorgesehen, wobei je ein elastokalorisches Element zwischen je einem ersten Kühlmediumkanal und je einem zweiten Kühlmediumkanal angeordnet ist und endseitig mit jeweils einem der Schlitten verbunden ist.

Somit können eine Vielzahl von ersten und zweiten Kühlmediumkanälen, insbesondere parallel zueinander angeordnet, vorgesehen sein, wobei jeweils zwischen einem der mehreren ersten Kühlmediumkanäle und einem der mehreren zweiten Kühlmediumkanäle eines der mehreren elastokalorischen Elemente angeordnet ist.

Durch Verschiebung der Schlitten an den nicht parallel zueinander angeordneten Führungsmitteln werden die elastokalorischen Elemente jeweils abwechselnd mit einem ersten Kühlmediumkanal und einem zweiten Kühlmediumkanal in einen thermischen Kontakt gebracht.

Bevorzugt ist vorgesehen, dass das mindestens eine elastokalorische Element ein elastokalorisches Band, insbesondere ein elastokalorisches Flachband, ist.

Die Haupterstreckungsrichtung des als elastokalorisches Band, insbesondere als elastokalorisches Flachband, ausgebildeten elastokalorischen Elementes entspricht der Richtung der größten Ausdehnung.

Mit weiterem Vorteil kann vorgesehen sein, dass der erste Kühlmediumkanal und der zweite Kühlmediumkanal, zumindest außerhalb der Außenwand, insbesondere außerhalb des Kontaktbereichs der Außenwand, thermisch isoliert sind.

Insbesondere können die Kühlmediumkanäle gegeneinander und/oder gegenüber der Umgebung thermisch isoliert sein. Hierfür kann eine Beschichtung vorgesehen sein. Ferner können der erste Kühlmediumkanal und der zweite Kühlmediumkanal in Kunststoff eingehaust sein.

Mit weiterem Vorteil kann vorgesehen sein, dass der mindestens eine erste Kühlmediumkanal und/oder der mindestens eine zweite Kühlmediumkanal Wärmeübertragungsstrukturen, insbesondere Rippen, aufweisen.

Die Wärmeübertragungsstrukturen und/oder die Rippen befinden sich bevorzugt innerhalb des ersten Kühlmediumkanals und/oder des zweiten Kühlmediumkanals. Hierdurch wird die Kontaktoberfläche des Kühlmediumkanals zu dem innerhalb des jeweiligen Kühlmediumkanals geführten Kühlmedium vergrößert, sodass ein optimaler Wärmeaustausch stattfinden kann. Dies ist insbesondere dann von Vorteil, wenn das Kühlmedium einen geringen Wärmeleitkoeffizienten aufweist. Luft ist ein Kühlmedium mit einem geringen Wärmeleitkoeffizienten.

Bevorzugt ist vorgesehen, dass das mindestens eine elastokalorische Element im thermischen Kontakt mit der Außenwand des mindestens einen ersten Kühlmediumkanals gedehnt, insbesondere gestreckt oder gestaucht, ist.

Mit anderen Worten ist das elastokalorische Element zumindest in dem Zustand, in dem das elastokalorische Element in einem thermischen Kontakt mit der Außenwand, insbesondere mit einem Kontaktbereich der Außenwand, des ersten Kühlmediumkanals steht, gedehnt, insbesondere gestreckt oder gestaucht.

Dabei kann ferner vorgesehen sein, dass das elastokalorische Element im thermischen Kontakt mit der Außenwand, insbesondere mit einem Kontaktbereich der Außenwand, des mindestens einen zweiten Kühlmediumkanals nicht gedehnt, insbesondere nicht gestreckt oder nicht gestaucht, ist.

Dabei kann bevorzugt vorgesehen sein, dass das mindestens eine elastokalorische Element, zumindest teilweise, bei einer Verschiebung der Schlitten an den nicht parallel zueinander angeordneten Führungsmitteln gedehnt wird.

Wie vorstehend erläutert, verändert sich der Abstand zwischen den beiden Schlitten bei einer Verschiebung entlang der nicht parallel angeordneten Führungsmittel zyklisch. Ist das elastokalorische Element zwischen den beiden Schlitten fest eingespannt, so wird dieses aufgrund dieser zyklischen Abstandsänderung gedehnt, das heißt gestreckt oder gestaucht. Somit kann bereits durch die nicht parallele Anordnung der Führungsmittel die Dehnung und/oder die Stauchung des elastokalorischen Elementes erzeugt werden, und somit der Wärmeübertrag von dem zweiten Kühlmediumkanal auf den ersten Kühlmediumkanal bewirkt werden.

Ferner kann vorgesehen sein, dass die Außenwand, insbesondere ein Kontaktbereich der Außenwand, des ersten Kühlmediumkanals, bevorzugt konvex, gewölbt ausgebildet ist, sodass das mindestens eine elastokalorische Element durch den Kontakt mit der Außenwand des ersten Kühlmediumkanals gedehnt wird.

Somit kann, insbesondere zusätzlich zu einer von der durch die Verschiebung der Schlitten entlang der nicht parallel angeordneten Führungsmittel bewirkten Dehnung des mindestens einen elastokalorischen Elementes, auch die Geometrie der Außenwand des ersten Kühlmediumkanals zu einer Dehnung des elastokalorischen Elementes führen. Ist die Außenwand des ersten Kühlmediumkanals konvex gewölbt ausgebildet, so kann sich das elastokalorische Element für eine große Überdeckung optimal an die Außenwand des ersten Kühlmediumkanals anschmiegen. Zudem kann aufgrund der Wölbung, bevorzugt des Kontaktbereichs, der Außenwand des Kühlmediumkanals eine zusätzliche Dehnung des elastokalorischen Elementes hervorgerufen werden.

Ist der Krümmungsradius der Außenwand des ersten Kühlmediumkanals groß, so wird nur ein geringer Anteil der Dehnung des elastokalorischen Elementes durch die Wölbung der Außenwand des ersten Kühlmediumkanals hervorgerufen. Die Wölbung des ersten Kühlmediumkanals dient in diesem Fall bevorzugt dazu, Fertigungstoleranzen auszugleichen.

Ist hingegen der Krümmungsradius der Außenwand des ersten Kühlmediumkanals klein, so kann ein Großteil der für den Wärmeübertrag notwendigen Dehnung des elastokalorischen Elementes durch die Wölbung hervorgerufen werden. In diesem Fall können die nicht parallel zueinander angeordneten Führungsmittel nur geringfügig von einer parallelen Anordnung abweichen, das heißt, dass ein zwischen den beiden Führungsmitteln eingeschlossener Winkel vergleichsweise klein, bevorzugt kleiner als 10°, weiter bevorzugt kleiner als 5°, ist.

Ferner kann vorgesehen sein, dass die Außenwand, bevorzugt der Kontaktbereich der Außenwand, des ersten Kühlmediumkanals elastisch verformbar, insbesondere federnd, ausgebildet ist, und/oder dass der erste Kühlmediumkanal federnd gelagert ist.

Beispielsweise kann die Außenwand, bevorzugt der Kontaktbereich der Außenwand, des ersten Kühlmediumkanals ein Federblech umfassen oder von einem Federblech gebildet sein.

Zudem kann auf die Außenwand, bevorzugt auf den Kontaktbereich der Außenwand, eine elastische Beschichtung aufgebracht sein. Die elastische Beschichtung kann als Graphitfolie mit hohem Wärmeleitkoeffizienten ausgebildet sein.

Die elastisch verformbare Ausgestaltung der Außenwand des ersten Kühlmediumkanals und/oder die federnde Lagerung des ersten Kühlmediumkanals ist insbesondere dann vorteilhaft, wenn die bevorzugt konvex gewölbt ausgebildete Außenwand des ersten Kühlmediumkanals nicht oder nur in einem geringen Umfang dazu dient, die Dehnung im elastokalorischen Element hervorzurufen, sondern wenn durch die Wölbung Fertigungstoleranzen ausgeglichen werden sollen. Wenn die Außenwand des ersten Kühlmediumkanals federnd nachgeben kann, oder wenn der erste Kühlmediumkanal federnd gelagert ist, werden die bei dem physischen Kontakt des elastokalorischen Elementes mit der Außenwand des ersten Kühlmediumkanals auftretenden Kräfte begrenzt, sodass keine oder nur eine geringfügige zusätzliche Dehnung des elastokalorischen Elementes hervorgerufen wird.

Bevorzugt ist vorgesehen, dass die Führungsmittel Laufbahnen, insbesondere Rollenlaufbahnen, sind, und/oder dass die Schlitten jeweils entlang eines Führungsmittels mittels einer Rolle geführt sind.

Die Laufbahnen, insbesondere die Rollenlaufbahn, können dabei einen Käfig umfassen.

Werden die Schlitten mittels Rollen entlang der Führungsmittel geführt, so kann eine besonders reibungsarme Verschiebung der Schlitten ermöglicht werden, sodass das von der Antriebsvorrichtung bereitzustellende Antriebsmoment reduziert werden kann.

Die Führungsmittel können auch jeweils zwei Radiallager, z.B. Rillenkugellager, aufweisen oder aus diesen bestehen.

Bevorzugt ist vorgesehen, dass die Antriebsvorrichtung Triebstangen, insbesondere Pleuel oder Stößel, umfasst, wobei die Schlitten jeweils drehbar oder starr mit einer der Triebstangen verbunden sind, wobei die Triebstangen entlang jeweils eines Führungsmittels geführt sind.

Die Triebstangen dienen dazu, die Schlitten entlang der Führungsmittel zu verschieben. Hierfür sind die Schlitten jeweils drehbar oder starr mit den Triebstangen verbunden. Falls Rollen zur Führung der Schlitten entlang der Führungsmittel vorgesehen sind, können die Rollen auch an den Triebstangen beziehungsweise an den Enden der Triebstangen befestigt sein.

Wenn die Führungsmittel jeweils zwei Radiallager, z.B. Rillenkugellager, aufweisen, können die Triebstangen in diesen translatorisch geführt werden.

Mit weiterem Vorteil ist vorgesehen, dass die Führungsmittel und/oder die Triebstangen drehbar gelagert sind, sodass ein Winkel zwischen den Führungsmitteln und/oder den Triebstangen einstellbar ist.

Je nach eingestelltem Winkel kann der Betrag der durch die Verschiebung der Schlitten entlang der nicht parallel angeordneten Führungsmittel hervorgerufenen Dehnung des elastokalorischen Elementes eingestellt werden, und somit die Leistung der elastokalorischen Wärmepumpe eingestellt werden.

Bevorzugt ist vorgesehen, dass die Antriebsvorrichtung mindestens einen Nocken umfasst, wobei die Triebstangen mittels des Nockens entlang des jeweiligen Führungsmittels bewegbar sind.

Der Nocken beziehungsweise der Nockenhub kann somit in eine Bewegung der Triebstangen umgesetzt werden.

Dabei kann ein, bevorzugt teleskopierbares, Kraftübertragungselement, insbesondere eine Stange oder Platte, vorgesehen sein, wobei das Kraftübertragungselement zwischen dem Nocken und den Triebstangen angeordnet ist, wobei das Kraftübertragungselement zur Kraftübertragung vom Nocken auf die Triebstangen ausgebildet ist.

Mit anderen Worten wird durch Drehung des Nockens der Nockenhub zunächst auf das Kraftübertragungselement übertragen. Die durch den Nockenhub erzeugte Bewegung des Kraftübertragungselementes wird dann an die Triebstangen weitergegeben, welche die Schlitten entlang der Führungsmittel verschieben.

Dabei kann vorgesehen sein, dass das Kraftübertragungselement mittels einer Rolle auf dem Nocken abläuft.

Die aufgrund der nicht parallelen Anordnung der Führungsmittel bei der zyklischen Verschiebung der Schlitten bevorzugt auftretenden Rückstellkräfte können dabei insbesondere dazu dienen, dass stets ein Kontakt zwischen Nocken und Rolle vorliegt.

Eine weitere Lösung der der Erfindung zugrundeliegenden Aufgabe besteht in einem Kraftfahrzeug umfassend eine vorstehend beschriebene elastokalorische Wärmepumpe.

Die Erfindung wird nachstehend näher anhand der beigefügten Figuren erläutert. Es zeigen:
- Fig. 1: eine elastokalorische Wärmepumpe,
- Fig. 2: einen Kühlmediumkanal mit leicht gekrümmter Außenwand,
- Fig. 3: einen Kühlmediumkanal mit stark gekrümmter Außenwand,
- Fig. 4: eine elastokalorische Wärmepumpe,
- Fig. 5: einen Kühlmediumkanal mit planer Außenwand, und
- Fig. 6: ein Kraftfahrzeug mit einer elastokalorischen Wärmepumpe.

In den Figuren sind identische oder einander entsprechende Teile mit den gleichen Bezugszeichen gekennzeichnet.

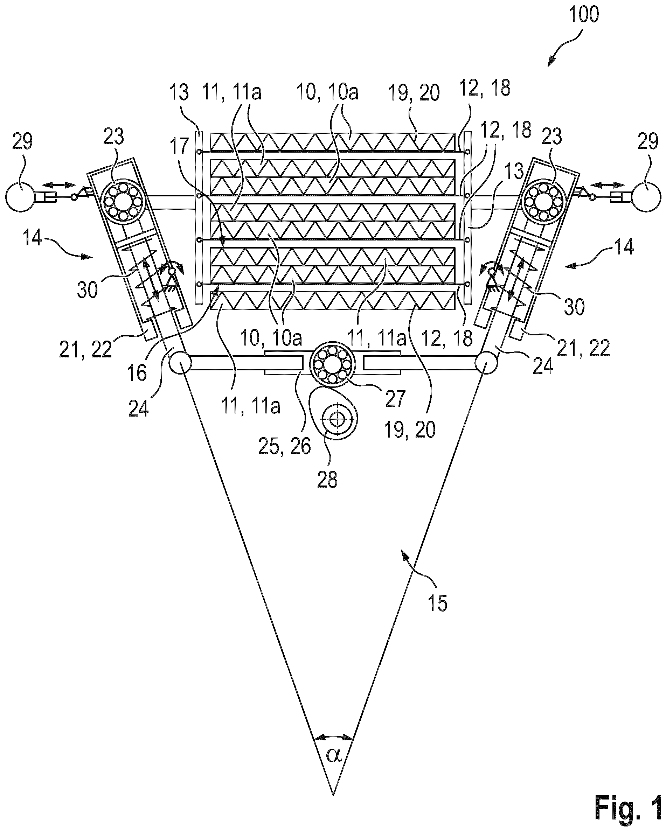

Fig. 1 zeigt eine elastokalorische Wärmepumpe 100 im Einklang mit der Erfindung. Die elastokalorische Wärmepumpe 100 umfasst eine Vielzahl von ersten Kühlmediumkanälen 10, welche als Heißkanäle 10a ausgebildet sind. Ferner umfasst die elastokalorische Wärmepumpe 100 eine Vielzahl von zweiten Kühlmediumkanälen 11, welche als Kaltkanäle 11a ausgebildet sind. Innerhalb der ersten Kühlmediumkanäle 10 und der zweiten Kühlmediumkanäle 11 ist je ein Kühlmedium, beispielsweise Wasser oder Luft, geführt. Die ersten Kühlmediumkanäle 10 und die zweiten Kühlmediumkanäle 11 sind abwechselnd und parallel zueinander angeordnet. Zwischen jeweils einem ersten Kühlmediumkanal 10 und einem benachbarten zweiten Kühlmediumkanal 11 ist je ein elastokalorisches Element 12 angeordnet. Die elastokalorischen Elemente 12 verlaufen in einem rechten Winkel quer zu den ersten Kühlmediumkanälen 10 und zu den zweiten Kühlmediumkanälen 11. Die elastokalorischen Elemente 12 sind endseitig jeweils mit einem Schlitten 13 verbunden. Die Schlitten 13 sind, in der Zeichenebene auf und ab, verschiebbar, an zwei nicht parallel zueinander angeordneten Führungsmitteln 14 angeordnet. Für die Verschiebung der Schlitten 13 ist eine Antriebsvorrichtung 15 vorgesehen, welche im Betrieb die Schlitten 13 entlang der Führungsmittel 14 zyklisch verschiebt, sodass die elastokalorischen Elemente 12 abwechselnd in einen thermischen Kontakt mit je einer Außenwand 16 eines der ersten Kühlmediumkanäle 10 und in einen thermischen Kontakt mit einer Außenwand 17 je eines der zweiten Kühlmediumkanäle 11 gebracht werden. Aufgrund der nicht parallelen Anordnung der Führungsmittel 14 werden die elastokalorischen Elemente 12 zyklisch gedehnt. Insbesondere sind die elastokalorischen Elemente 12 im thermischen Kontakt mit der Außenwand 16 des jeweiligen ersten Kühlmediumkanals 10 gedehnt.

Die elastokalorischen Elemente 12 sind als elastokalorische Flachbänder 18 ausgebildet. Die ersten Kühlmediumkanäle 10 und die zweiten Kühlmediumkanäle 11 weisen im Inneren Wärmeübertragungsstrukturen 19 auf, welche als Rippen 20 ausgebildet sind, und mittels derer eine Wärmeübertragung zwischen dem Material der Kühlmediumkanäle 10, 11 und dem in den Kühlmediumkanälen 10, 11 geführten Mühlmedium bevorteilt wird.

Die Führungsmittel 14 sind als Laufbahnen 21 beziehungsweise als Rollenlaufbahnen 22 ausgebildet. Jeder der Schlitten 13 ist mittels einer Rolle 23 entlang jeweils einer der Laufbahnen 21 geführt. Die Antriebsvorrichtung 15 umfasst Triebstangen 24. Die Triebstangen 24 sind endseitig mit dem Schlitten 13, insbesondere im Bereich der Rollen 23, verbunden. Die Triebstangen 24 werden entlang der Laufbahnen 22 in der Zeichenebene in etwa auf und ab bewegt, wodurch die Schlitten 13 ebenfalls entlang der Laufbahnen 21 bewegt werden und die elastokalorischen Elemente 12 abwechselnd mit jeweils einem ersten Kühlmediumkanal 10 und einem zweiten Kühlmediumkanal 11 in thermischen Kontakt kommen. Ferner umfasst die Antriebsvorrichtung 15 ein teleskopierbares Kraftübertragungselement 25, welches als teleskopierbare Platte 26 ausgebildet ist. Die Platte 26 umfasst eine Rolle 27, welche auf einem Nocken 28 der Antriebsvorrichtung 15 abläuft. Durch Drehung des Nockens 28 wird der Nockenhub über die Rolle 27 auf das Kraftübertragungselement 25 übertragen, welches wiederum die Triebstangen 24 entlang der als Laufbahnen 21 ausgebildeten Führungsmittel 14 bewegt. Ein Winkel α zwischen den Führungsmitteln 14 ist mittels Aktoren 29 einstellbar. Die Führungsmittel 14 sind zu diesem Zweck drehbar gelagert. Je größer der Winkel α zwischen den Führungsmitteln 14 eingestellt wird, desto größer wird die Dehnung der zwischen den Schlitten 13 angeordneten elastokalorischen Elemente 12. Durch Einstellung des Winkels α kann somit die Wärmeleistung der elastokalorischen Wärmepumpe 100 eingestellt werden. Zusätzliche Federn 30 in den Laufbahnen 21 dienen zur Reduktion des für den Betrieb der elastokalorischen Wärmepumpe 100 von der Antriebsvorrichtung 15 bereitzustellenden Antriebsmoments.

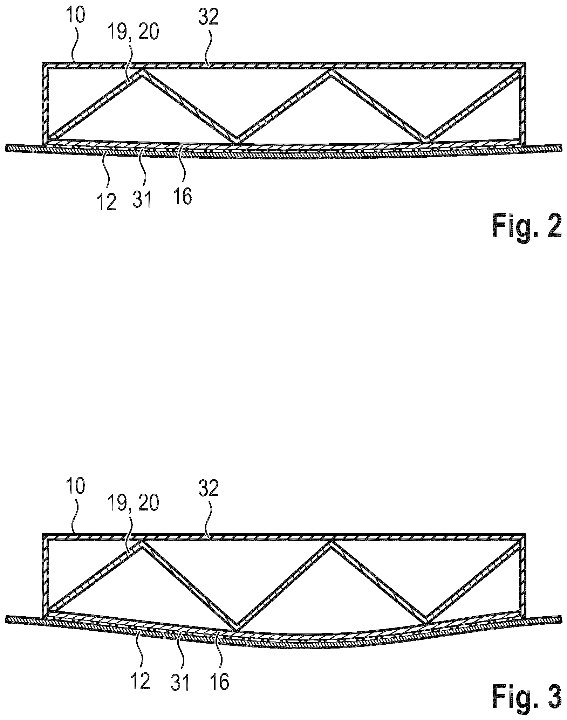

Fig. 2 zeigt einen Querschnitt durch einen ersten Kühlmediumkanal 10. Ein elastokalorisches Element 12 steht in einem thermischen Kontakt mit einer Außenwand 16 des ersten Kühlmediumkanals 10. Die Außenwand 16 stellt einen Kontaktbereich 31 für das elastokalorische Element 12 zur Verfügung. Die Außenwand 16 ist leicht konvex gewölbt ausgebildet, sodass das elastokalorische Material 12, wenn es in thermischen Kontakt mit der Außenwand 16 steht, leicht gekrümmt ist. Durch diese Krümmung können Fertigungstoleranzen ausgeglichen werden. Zudem kann durch die Krümmung im thermischen Kontakt des elastokalorischen Elementes 12 an der Außenwand 16 eine zusätzliche Dehnung des elastokalorischen Elementes 12 hervorgerufen werden. Ist eine zusätzliche Dehnung nicht gewünscht, so kann die Außenwand 16 zumindest im Kontaktbereich 31 federnd ausgebildet sein. Alternativ können auch die ersten Kühlmediumkanäle 10 selbst federnd gelagert sein. Außerhalb des Kontaktbereiches 31 der Außenwand 16 ist der Kühlmediumkanal 10 mit einer thermischen Isolierung 32 versehen.

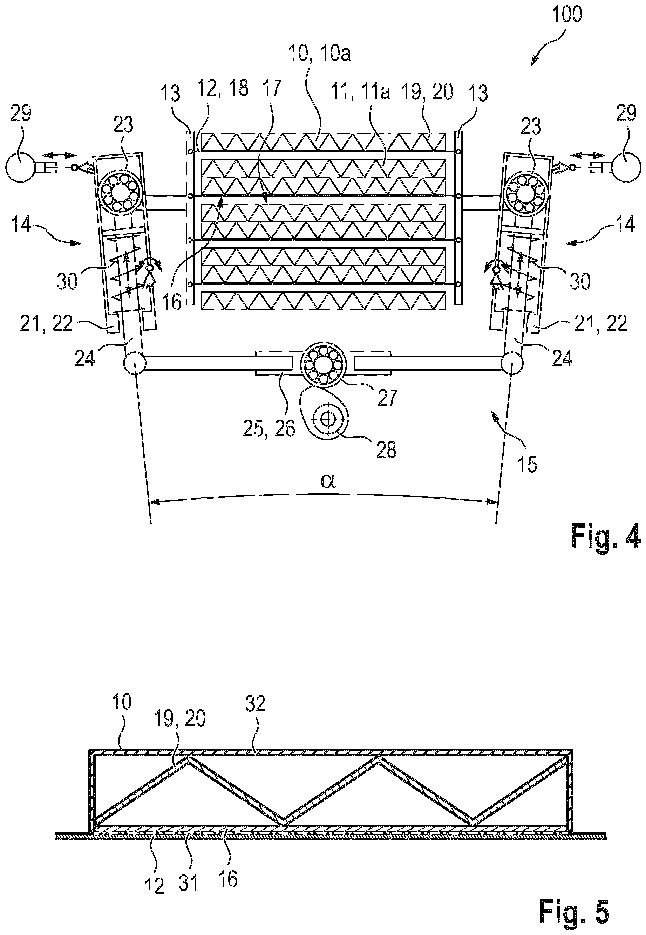

Fig. 3 zeigt eine weitere Ausgestaltung eines ersten Kühlmediumkanals 10. Gegenüber dem Kühlmediumkanal 10 nach Fig. 2 ist die Außenwand 16 beziehungsweise der Kontaktbereich 31 der Außenwand 16 für das elastokalorische Element 12 stärker gewölbt. Durch die stärkere Wölbung wird das elastokalorische Element 12 im thermischen Kontakt stärker gekrümmt, so dass eine stärkere zusätzliche Dehnung in das elastokalorische Element 12 eingebracht wird. Sind die ersten Kühlmediumkanäle 10 nach Fig. 3 ausgebildet, so kann insbesondere ein Großteil der Dehnung des elastokalorischen Elementes 12 durch die Krümmung der Außenwand 16 des ersten Kühlmediumkanals 10 hervorgerufen werden. In diesem Fall kann, wie anhand der in Fig. 4 dargestellten elastokalorischen Wärmepumpe 100 gezeigt, der Winkel α zwischen den Führungsmitteln 14 vergleichsweise klein, bevorzugt kleiner als 10°, weiter bevorzugt kleiner als 5°, gewählt werden. Somit wird nur noch ein geringer Teil der Dehnung der elastokalorischen Elemente 12 durch die nicht parallele Anordnung der Führungsmittel 14 aufgebracht.

Fig. 5 zeigt einen weiteren ersten Kühlmediumkanal 10. Die zweiten Kühlmediumkanäle 11 können identisch zu dem ersten Kühlmediumkanal 10 nach Fig. 5 ausgebildet sein. Im Gegensatz zu den ersten Kühlmediumkanälen 10 nach den Fig. 3 und 4 ist die Außenwand 16, beziehungsweise der Kontaktbereich 31 der Außenwand 16 für den thermischen Kontakt mit dem elastokalorischen Element 12, plan beziehungsweise eben ausgebildet. Dies bedeutet insbesondere, dass durch den Kontakt des elastokalorischen Elementes 12 mit der Außenwand 16 keine oder nur eine äußerst geringe zusätzliche Dehnung in das elastokalorische Element 12 eingebracht wird.

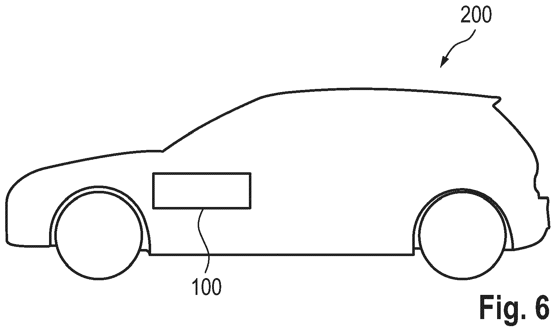

Fig. 6 zeigt ein Kraftfahrzeug 200 mit einer elastokalorischen Wärmepumpe 100.

### Bezugszeichenliste

- 100: Elastokalorische Wärmepumpe
- 200: Kraftfahrzeug

- 10: Erster Kühlmediumkanal
- 10a: Heißkanal
- 11: Zweiter Kühlmediumkanal
- 11a: Kaltkanal
- 12: Elastokalorisches Element
- 13: Schlitten
- 14: Führungsmittel
- 15: Antriebsvorrichtung
- 16: Außenwand
- 17: Außenwand
- 18: Elastokalorisches Flachband
- 19: Wärmeübertragungsstruktur
- 20: Rippe
- 21: Laufbahn
- 22: Rollenlaufbahn
- 23: Rolle
- 24: Triebstange
- 25: Kraftübertragungselement
- 26: Platte
- 27: Rolle
- 28: Nocken
- 29: Aktor
- 30: Feder
- 31: Kontaktbereich
- 32: Isolierung

## Patentansprüche

1. Elastokalorische Wärmepumpe (100) umfassend mindestens einen ersten Kühlmediumkanal (10), mindestens einen zweiten Kühlmediumkanal (11), mindestens ein elastokalorisches Element (12), und eine Antriebsvorrichtung (15), wobei das mindestens eine elastokalorische Element (12) zwischen einem ersten Kühlmediumkanal (10) und einem zweiten Kühlmediumkanal (11) angeordnet ist und endseitig mit jeweils einem Schlitten (13) verbunden ist, wobei die Schlitten (13) verschiebbar an zwei nicht parallel zueinander angeordneten Führungsmitteln (14) angeordnet sind, wobei die Antriebsvorrichtung (15) ausgebildet ist, die Schlitten (13) entlang der Führungsmittel (14) zyklisch zu verschieben, so dass das mindestens eine elastokalorische Element (12) abwechselnd in einen thermischen Kontakt mit einer Außenwand (16), insbesondere mit einem Kontaktbereich (31) einer Außenwand (16), des ersten Kühlmediumkanals (10) und in einen thermischen Kontakt mit einer Außenwand (17), insbesondere mit einem Kontaktbereich (31) einer Außenwand (17), des zweiten Kühlmediumkanals (11) gebracht wird.

2. Elastokalorische Wärmepumpe (100) nach Anspruch 1, **dadurch gekennzeichnet, dass** mehrere erste Kühlmediumkanäle (10), mehrere zweite Kühlmediumkanäle (11) und mehrere elastokalorische Elemente (12) vorgesehen sind, wobei je ein elastokalorisches Element (12) zwischen je einem ersten Kühlmediumkanal (10) und je einem zweiten Kühlmediumkanal (11) angeordnet ist und endseitig mit jeweils einem der Schlitten (13) verbunden ist.

3. Elastokalorische Wärmepumpe (100) nach Anspruch 1 oder 2, **dadurch gekennzeichnet, dass** das mindestens eine elastokalorische Element (12) ein elastokalorisches Band, insbesondere ein elastokalorisches Flachband (18), ist, und/oder dass der mindestens eine erste Kühlmediumkanal (10) und/oder der mindestens eine zweite Kühlmediumkanal (11), Wärmeübertragungsstrukturen (19), insbesondere Rippen (20), aufweisen.

4. Elastokalorische Wärmepumpe (100) nach einem der vorgenannten Ansprüche, **dadurch gekennzeichnet, dass** das mindestens eine elastokalorische Element (12) im thermischen Kontakt mit der Außenwand (16) des mindestens einen ersten Kühlmediumkanals (10) gedehnt, insbesondere gestreckt oder gestaucht, ist.

5. Elastokalorische Wärmepumpe (100) nach einem der vorgenannten Ansprüche, **dadurch gekennzeichnet, dass** das mindestens eine elastokalorische Element (12), zumindest teilweise, bei einer Verschiebung der Schlitten (13) an den nicht parallel zueinander angeordneten Führungsmitteln (14) gedehnt wird.

6. Elastokalorische Wärmepumpe (100) nach einem der vorgenannten Ansprüche, **dadurch gekennzeichnet, dass** die Außenwand (16), insbesondere ein Kontaktbereich (31) der Außenwand (16), des ersten Kühlmediumkanals (10), bevorzugt konvex, gewölbt ausgebildet ist, sodass das mindestens eine elastokalorische Element (12) durch den Kontakt mit der Außenwand (16) des ersten Kühlmediumkanals (10) gedehnt wird.

7. Elastokalorische Wärmepumpe (100) nach einem der vorgenannten Ansprüche, **dadurch gekennzeichnet, dass** die Außenwand (16), bevorzugt der Kontaktbereich (31) der Außenwand (16), des ersten Kühlmediumkanals (10) elastisch verformbar, insbesondere federnd, ausgebildet ist, und/oder dass der erste Kühlmediumkanal (10) federnd gelagert ist.

8. Elastokalorische Wärmepumpe (100) nach einem der vorgenannten Ansprüche, **dadurch gekennzeichnet, dass** die Führungsmittel (14) Laufbahnen (21), insbesondere Rollenlaufbahn (22), sind, und/oder dass die Schlitten (13) jeweils entlang eines Führungsmittels (14) mittels einer Rolle (23) geführt sind, und/oder dass die Antriebsvorrichtung (15) Triebstangen (24), insbesondere Pleuel oder Stößel, umfasst, wobei die Schlitten (13) jeweils drehbar oder starr mit einer der Triebstangen (24) verbunden sind, wobei die Triebstangen (24) entlang jeweils eines Führungsmittels (14) geführt sind.

9. Elastokalorische Wärmepumpe (100) nach einem der vorgenannten Ansprüche, **dadurch gekennzeichnet, dass** die Führungsmittel (14) und/oder die Triebstangen (24) drehbar gelagert sind, so dass ein Winkel zwischen den Führungsmitteln (14) und/oder den Triebstangen (24) einstellbar ist.

10. Kraftfahrzeug (200) umfassend eine elastokalorische Wärmepumpe (100) nach einem der vorgenannten Ansprüche.
